# EUROPEAN PATENT SPECIFICATION

(11) **EP 3 714 722 B1**
(45) Date of publication and mention of the grant of the patent: **30.08.2023**
(21) Application number: 20166576.7
(22) Date of filing: 30.03.2020
(51) Int. Cl.: A42B 3/18, G02C 3/02

(54) **HELMET ASSEMBLY WITH EYEWEAR AND AIR DEFLECTOR SYSTEMS**
HELMANORDNUNG MIT BRILLEN- UND LUFTDEFLEKTORSYSTEMEN
ENSEMBLE CASQUE COMPRENANT DES LUNETTES ET SYSTÈMES DE DÉFLECTEUR D'AIR

(30) Priority: 29.03.2019 US 201962826880 P; 19.03.2020 US 202016824555
(43) Date of publication of application: 30.09.2020
(73) Proprietor: 100% Speedlab, LLC, San Diego, CA 92123 (US)
(72) Inventor: TAN, Dennis C., San Diego, CA California 92123 (US); YOUNG, Michael D., San Diego, CA California 92123 (US)
(74) Representative: Murgitroyd & Company

(56) References cited:
- EP-A1- 3 284 360
- EP-A2- 2 816 917
- WO-A1-00/24278
- US-B1- 6 611 959

## Description

### TECHNICAL FIELD

One or more embodiments relate generally to sport helmets and, more particularly, to helmets configured to receive corresponding sunglasses and helmets with air deflectors.

### BACKGROUND

Helmets are worn for various sports or activities, such as motorsports, powersports, snowsports, watersports, biking, or the like, to protect wearers' heads, for example, by absorbing impacts. Styles of helmets may include closed helmets and open faced helmets. A closed helmet may include a tinted visor, but an open faced helmet typically does not include any type of eyewear. Thus, wearers of the helmet generally also wear eyewear such as sunglasses to provide eye protection.
US 6,611,959 discloses a helmet with individual eye protectors arranged in channels in the sides of the helmet. WO2000/0024278 discloses a helmet with a rearward channel for retaining a goggle strap when in use.

### SUMMARY

According to the present invention, there is provided helmet characterized according to claim 1.

In a certain such embodiment, the first arm and/or the second arm may be curved. In an additional embodiment, the first channel and/or the second channel may include a substantially horizontal convex shape.

In a certain such embodiment, a liner may be disposed within the outer shell.

In a certain such embodiment, a compressible material may be disposed within the one or more channels.

In a certain such embodiment, a visor may be coupled to the outer shell. The visor may include a vent disposed on a lower portion of the visor. In a certain such embodiment, the vent may be configured to direct airflow to a portion of the outer shell and/or the wearer's head.

In a certain such embodiment, the helmet assembly may further include the eyewear.

The helmet may include a visor coupled to the outer shell and including a vent disposed on a lower portion of the visor.

The scope of the invention is defined by the claims. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 shows a perspective view of a helmet, in accordance with an embodiment of the invention.
Fig. 2 shows a rear view of the helmet of Fig. 1, in accordance with an embodiment of the invention.
Fig. 3 shows a cross-sectional view of the helmet of Fig. 1 along line 3-3' in Fig. 2, in accordance with an embodiment of the invention.
Figs. 4 and 5 show perspective views of the helmet of Fig. 1 with coupled eyewear, in accordance with embodiments of the invention.
Fig. 6 shows a perspective view of a portion of the helmet of Fig. 1, in accordance with an embodiment of the invention.
Fig. 7 shows a front view of the helmet of Fig. 1 with an air deflector visor, in accordance with an embodiment of the invention.
Fig. 8 shows a top view of the helmet and air deflector visor of Fig. 7, in accordance with an embodiment of the invention.
Fig. 9 shows a flowchart detailing a method of using the helmet of Fig. 1.
Fig. 10 shows a flowchart detailing a method of using the air deflector visor.

Embodiments of the invention and their advantages are best understood by referring to the detailed description that follows. It should be appreciated that like reference numerals are used to identify like elements illustrated in one or more of the Figures.

### DETAILED DESCRIPTION

A helmet configured to hold a corresponding eyewear piece and including a visor that includes an air deflector is described herein. "Helmet assembly," as used herein, may refer to a helmet, a visor, and/or eyewear associated with the helmet, either separately or in any combination.

The systems and techniques described herein allow for a helmet to receive and hold an eyewear (e.g., sunglasses) of the wearer. Thus, the helmet includes features to hold the eyewear such that, for example, when weather conditions change, the wearer has a convenient and secure place to hold the eyewear instead of hooking the eyewear on the wearer's clothing or placing it in another unsecure area. Additionally, the helmet described herein may include a visor with air deflector vents to deflect airflow around the helmet for lower drag and/or deflect airflow to portions of the helmet to aid in the cooling of the wearer.

A helmet is disclosed in accordance with various embodiments. The helmet includes an outer shell that includes one or more channels configured to receive and hold at least a portion of a corresponding eyewear. In certain additional embodiments, the helmet can include the visor. The visor can be coupled to the outer shell of the helmet and can include a vent disposed on a lower portion of the visor configured to direct airflow to a portion of the outer shell and/or the wearer's head.

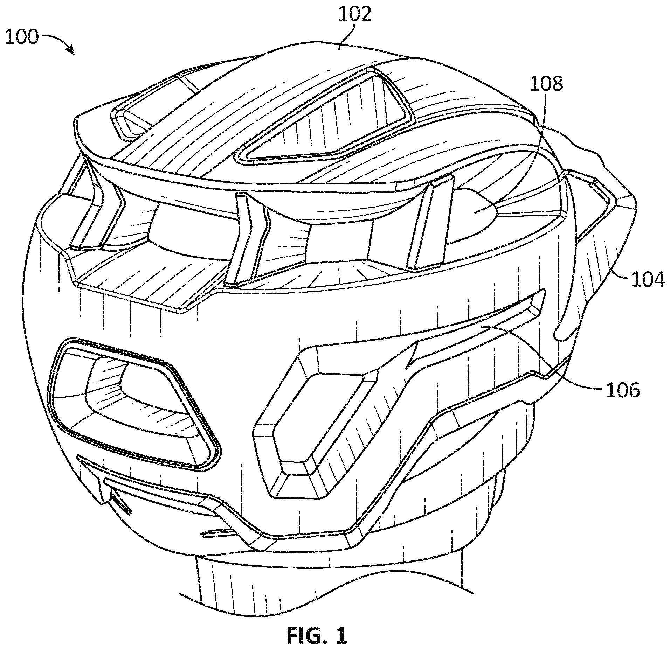

Fig. 1 shows a perspective view of a helmet, in accordance with an embodiment of the invention. Fig. 1 shows helmet 100 with an outer shell 102 and a visor 104. The outer shell 102 is configured to be disposed around the head of a wearer. In certain embodiments, one or more liners may be disposed within the outer shell 102. The liners may be, for example, padding to absorb and dissipate impacts against the outer shell 102 to protect the wearer's head. Additionally, the outer shell 102 includes channels 106 and openings 108.

Channels 106 are coupled to or formed within the outer shell 102. The channels 106 are configured to receive a portion of a corresponding eyewear. The channels 106 receive the arms (e.g., temples) of a corresponding glasses or sunglasses. The channels 106 are configured to hold the eyewear such that one or more lenses of the eyewear is disposed on a rearward portion of the outer shell (e.g., when the channels 106 hold the eyewear, the eyewear may be facing rearward). Such a configuration disposes the eyewear away from the eyes of the wearer and can also dispose the eyewear to prevent or minimize disruption of airflow over the helmet 100.

Visor 104 may be coupled to or integrated within the outer shell 102 (e.g., formed as a part of the outer shell 102). The visor 104 may provide shade to prevent sunlight from shining into the wearer's eyes. Additionally, the visor 104 may include one or more vents configured to redirect air. In a certain embodiment, the visor 104 may, for example, be configured to redirect air into one or more openings 108 (e.g., to cool the wearer) or configured to redirect air around the outer shell 102 (e.g., to decrease air resistance).

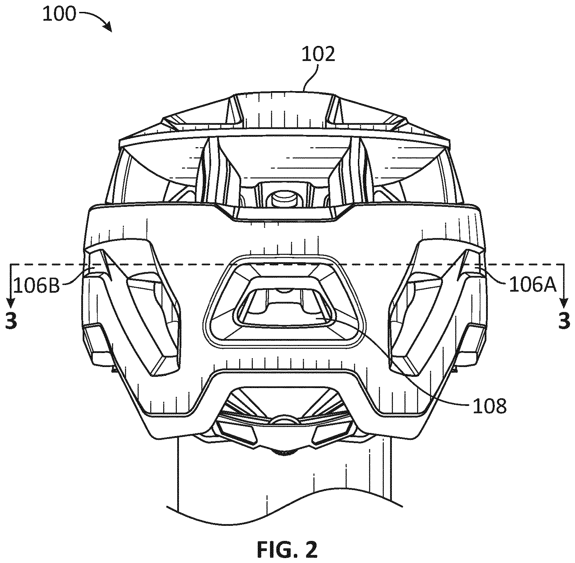

The helmet 100 is further shown in Fig. 2. Fig. 2 shows a rear view of the helmet of Fig. 1, in accordance with an embodiment of the invention. The outer shell 102 includes a plurality of channels 106A and 106B. Each of the channels 106A and 106B are configured to each receive an arm of the eyewear. The channel 106A may be, for example, disposed on one lateral side of the outer shell and the channel 106B may be disposed on an opposite lateral side of the outer shell 102. The channel 106A is thus configured to receive a first arm of the eyewear and the channel 106B is configured to receive a second arm of the eyewear.

In certain embodiments, one or both of the channels 106A and 106B may be curved to hold the corresponding first arm and/or the second arm within the first channel and/or the second channel. Such a curvature may correspond to a curvature of the arm(s). In certain embodiments, the curvature may be a substantially convex shape. The convex shape may aid in holding the eyewear to the outer shell 102 by, for example, preventing the arms of the eyewear, when inserted into the channels 106A and/or 106B, from decoupling from the channels 106A and/or 106B unless pushed outward (e.g., the arms are pushed away from each other) or otherwise deformed.

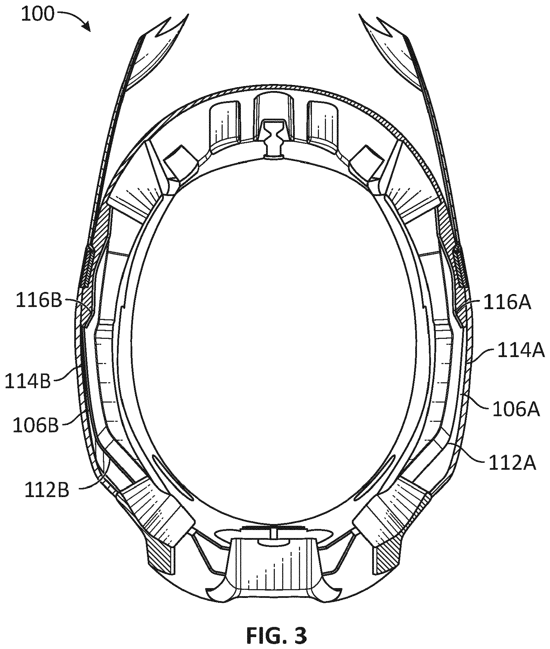

Fig. 3 shows a cross-sectional view of the helmet of Fig. 1 along line 3-3' in Fig. 2, in accordance with an embodiment of the invention. Channel 106A may include a first portion 112A, a second portion 114A, and a third portion 116A. Channel 106B may accordingly include a first portion 112B, a second portion 114B, and a third portion 116B. A portion of the corresponding eyewear, such as the arms of the eyewear, may be inserted into the channels 106A and 106B through first portions 112A and 112B, respectively, before traveling to second portions 114A and 114B. The ends of the arms may then be disposed in the third portions 116A and 116B when the arms are held within the channels 106A and 106B, respectively.

In certain embodiments, the first portions 112A and 112B may include a lead-in that, when the surfaces of the first portions 112A and 112B are extended in an imaginary line towards the back of the outer shell 102, form an angle. Thus, when the arms of the eyewear are moved along the first portions 112A and 112B, force from contact between the arms and the first portions 112A and 112B may provide force to displace the arms apart. The arms may thus, accordingly, provide a reaction force to grip portions of the channels 106A and 106B, respectively, to hold the arms to and/or within the channels 106A and 106B.

The second portions 114A and 114B may be disposed more parallel to each other than first portions 112A and 112B. The second portions 114A and 114B may form surfaces that allow for the arms of the eyewear to more easily slide within the channels 106A and 106B.

The third portions 116A and 116B may be angled in the opposite direction of the first portions 112A and 112B. Thus, the surfaces of the third portions 116A and 116B may be extended in an imaginary line towards the front of the outer shell 102 to form an angle. The third portions 116A and 116B may be shaped so that, if a wearer wishes to remove the arms of the eyewear from the channels 106A and 106B, the arms may need to be displaced apart to remove them from, at least, the third portions 116A and 116B. As such, without the arms of the eyewear being displaced (e.g., by a force provided by the wearer), the arms of the eyewear may be held within the channels 106A and 106B.

In certain embodiments, the first portion 112A, the second portion 114A, and the third portion 116A and/or the first portion 112B, the second portion 114B, and the third portion 116B may form a C-shaped path for the arm(s) of the eyewear to travel along. Such a C-shaped path may allow for the arms to be easily inserted into the channels 106A and 106B and securely held within the channels 106A and 106B when portions of the arms (e.g., the end of the arms) are disposed within the third portions 116A and 116B.

In certain embodiments, the channels 106A and 106B and/or the arms of the eyewear may include features to provide haptic feedback to the wearer that the arms are fully inserted into the channels 106A and 106B. Thus, for example, the arms can be configured to bottom against the walls of the channels 106A and/or 106B. Alternatively or additionally, the C-shaped path may decrease the insertion force required for the arms to be inserted into the channels 106A and/or 106B near the end of travel of the channels 106A and/or 106B. In certain such embodiments, the C-shaped path may position the arms within the channels 106A and/or 106B near the end of travel, effectively automatically moving the arms into the proper position.

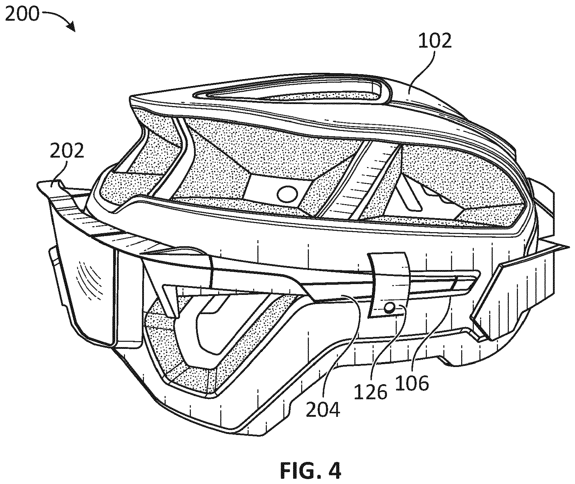

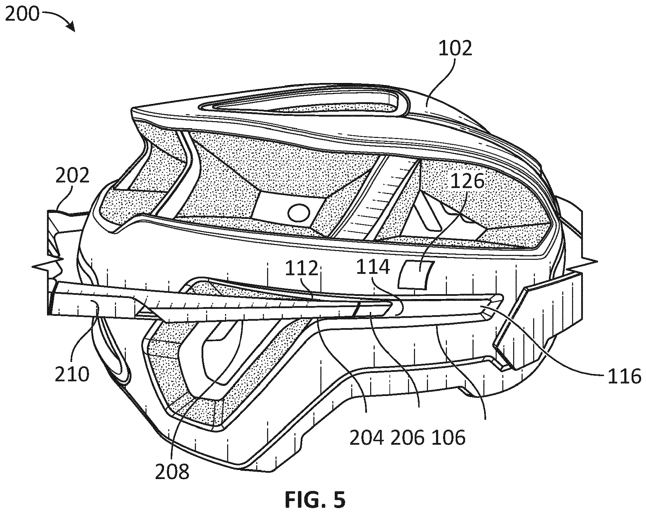

Eyewear being held by the channels are shown in Figs. 4 and 5. Figs. 4 and 5 show perspective views of the helmet of Fig. 1 with coupled eyewear, in accordance with embodiments of the invention. Figs. 4 and 5 illustrate a helmet assembly 200 that includes a helmet with outer shell 102 and eyewear 202. The outer shell 102 includes channels 106 as described herein and the eyewear 202 includes arms 204. Each channel 106 is configured to receive an arm 204 of the eyewear 202 and hold the arm 204 within the channel 106 when the arm 204 is disposed within, at least, an engaged position (e.g., a position where portions of the arm 204 is disposed proximate to portions of the first portion 112, second portion 114, and third portion 116 of the channel 106).

The helmet assembly 200 may additionally include the latch 126. The latch 126 may be coupled to the outer shell 102 and may be configured to move (e.g., rotate) between an open and a closed position. The latch 126 may include one or more features such as hinges, snaps, magnetic couplings, and/or other features to allow for the latch 126 to move between the positions and to hold the latch 126 within, at least, the closed position. Thus, for example, the latch 126 may include a snap that holds the latch 126 within, at least, the closed position.

In the open position, the latch 126 may allow for the arm 204 to be disposed within the channel 106. When the eyewear 202 is disposed within the channel 106, latch 126 may be moved to the closed position cover a portion of the arm 204 and aid in holding the arm 204 within the channel 106. In certain embodiments, the latch 126 may include a deformable surface that may deform when contacting the arm 204 disposed within the channel 106 to, for example, further aid in holding the arm 204 within the channel 106.

As shown in Fig. 5, the arms 204 of the eyewear 202 may be partially disposed within the channels 106. The arms 204 may include a first portion 210, a second portion 208, and a third portion 206. In Fig. 5, the arms 204 of the eyewear 202 may be inserted into the channels 106 or be removed from the channels 106. When being inserted, the third portion 206 may first be disposed proximate to or contact first portion 112 and then move along the channel 106 to be proximate to or contact the second portion 114 and, afterwards, the third portion 116. When the arms 204 are fully inserted into the channels 106, the first portion 210 of the arm 204 may be disposed proximate to or contact the first portion 112 of the channel 106, the second portion 208 of the arm 204 may be disposed proximate to or contact the second portion 114 of the channel 106, and the third portion 206 may be disposed proximate to or contact the third portion 116.

In certain embodiments, the channel 106 may be shaped to substantially conform with the shape of the arm 204. Thus, for example, one or more of a height, length, width, or curvature of the arm 204 may be shaped to conform with the channel 106. Thus, for example, the arm 204 may be curved to conform with at least a portion of the C-shaped curvature of the channel 106. In certain such embodiments, the eyewear 202 may be configured to complement the helmet 100 and/or vice versa (e.g., the shape of the arm 204 and/or the shaped of the channel 106 may be configured to include complementary geometry). Thus, the eyewear 202 and the helmet 100 may be configured to form the helmet assembly 200.

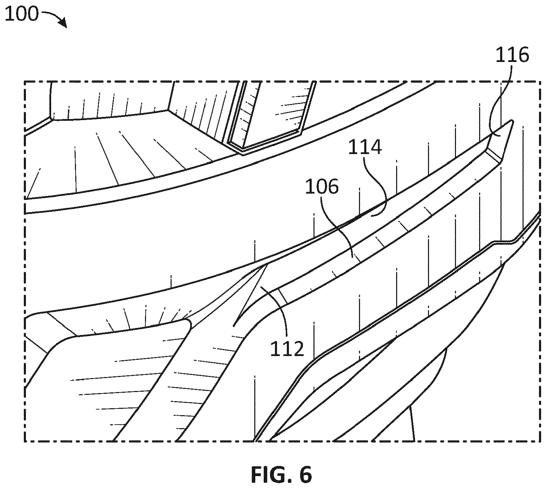

Fig. 6 shows a perspective view of a portion of the helmet of Fig. 1, in accordance with an embodiment of the invention. As shown in Fig. 6, the channel 106 may be defined by sidewalls on, for example, the top, bottom, and forward end of the channel 106. Thus, the channel 106 may be, for example, defined as a depression within the outer shell 102. Furthermore, as shown in Fig. 6, the channel 106 may be curved along each of the first portion 112, the second portion 114, and the third portion 116. Such a curved channel 106 may retain a curved arm 204 within the channel 106. In a certain embodiment, the channel 106 may additionally include a compressible material disposed within the channel 106 to, for example, further aid in holding the arm 204 within the channel 106.

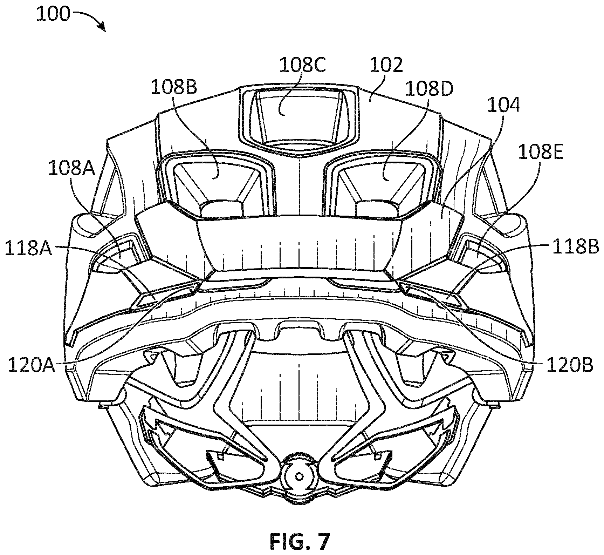

Fig. 7 shows a front view of the helmet of Fig. 1 with an air deflector visor, in accordance with an embodiment of the invention. Fig. 7 illustrates the helmet 100 with the outer shell 102 and the visor 104. The visor 104 may include vents 118A and 118B. The vents 118A and 118B may be disposed on opposing sides of the visor 104, but other embodiments may dispose the vents 118A and 118B on other portions of the visor 104.

The vents 118A and 118B may include vanes 120A and 120B. Vanes 120A and 120B may be configured to deflect airflow. For example, vanes 120A and 120B may be configured to deflect airflow into one or more openings 108A-E. The openings 108A-C may be openings within the outer shell 102 and air deflected into the openings 108A-E may be contact the wearer's head to cool the wearer's head. In certain embodiments, the openings 108A-E may be completely open, but other embodiments may include filters, liners, or mesh disposed within the openings 108A-E. Additionally, the vanes 120A and 120B may be configured to deflect airflow around the helmet 100 (e.g., to decrease drag). While vanes 120A and 120B are shown in Fig. 7, other embodiments may include any number of vanes. Each of the vanes may aid in deflecting airflow into the openings 108A-E, around the helmet 100, and/or to other portions of the helmet 100.

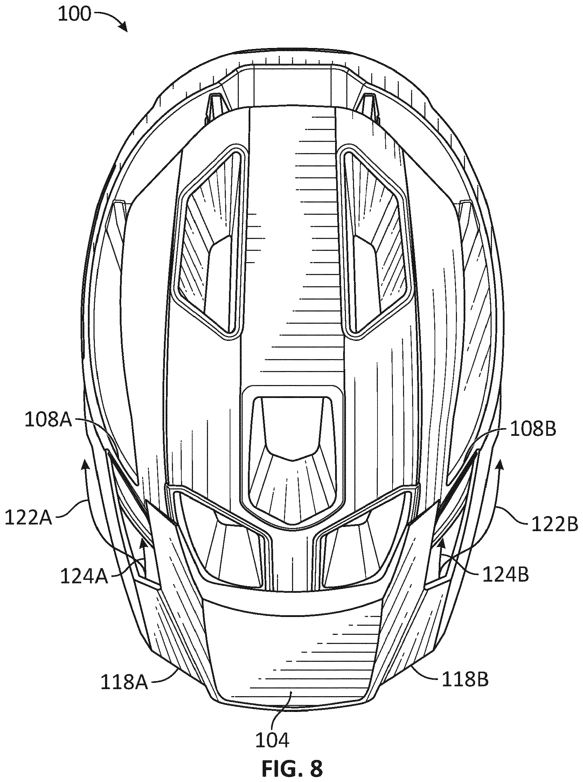

The deflection of such airflow may be illustrated in Fig. 8. Fig. 8 shows a top view of the helmet and air deflector visor of Fig. 7, in accordance with an embodiment of the invention. As shown in Fig. 8, the vents 118A and 118B of the visor 104 may be configured to deflect airflow into openings 108A and 108B along airflow paths 124A and 124B, respectively, and/or around the helmet 100 along airflow paths 122A and 122B, respectively.

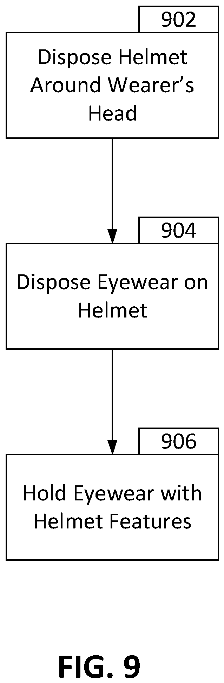

Fig. 9 shows a flowchart detailing a method of using the helmet of Fig. 1. Fig. 9 may illustrate a technique of coupling and holding eyewear with the helmet of Fig. 1.

In block 902, the helmet may be worn by a wearer. Thus, for example, the helmet, including the liners and the outer shell, may be disposed around at least a portion of the wearer's head. The helmet may also be strapped to the wearer or otherwise secured to the wearer's head.

In block 904, eyewear may be disposed on and coupled to the helmet. For example, the arms of the eyewear may be inserted into the channels of the outer shell of the helmet. In certain embodiments, the channel and/or the arms may include features to provide haptic feedback to the wearer that the arms are fully inserted (e.g., through bottoming of the arms against the channel and/or through a decrease in insertion force such as when the C-shaped geometries of the channel and the arms are aligned).

In block 906, the eyewear may be held relative to the helmet. Thus, for example, the channels may include one or more features to hold the eyewear relative to the helmet unless a force is applied to the eyewear to remove the eyewear from the helmet.

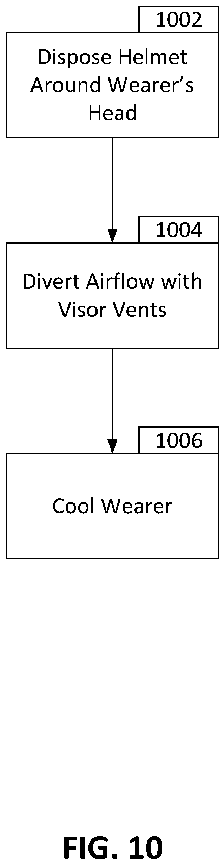

Fig. 10 shows a flowchart detailing a method of using the air deflector visor. In block 1002, the helmet may be disposed around the wearer's head and worn by the wearer, similar to that in block 902.

In block 1004, airflow may be diverted by vents of the visor. For example, the vents may include vanes that are configured to divert airflow. Airflow may be diverted around the helmet to decrease drag, or diverted into one or more openings of the helmet. If the airflow is diverted into the openings of the helmet, the airflow may cool the wearer in block 1006.

## Claims

1. A helmet (100) comprising:
an outer shell (102) configured to be disposed at least partly around a head of a wearer, wherein the outer shell (102) comprises one or more channels (106) configured to receive a portion of a corresponding eyewear (202) and hold the eyewear relative to the outer shell (102),
the outer shell (102) comprising a first channel (1068) disposed on a left side of the outer shell (102) and a second channel (106A) on a right side of the outer shell (102), and
the first channel (106B) being configured to receive a first arm of the eyewear and the second channel (106A) being configured to receive a second arm of the eyewear;
**characterised in that**:
the first channel and second channel are configured to hold the eyewear such that a lens of the eye wear is disposed on a rearward portion of the outer shell.

2. The helmet (100) of claiml, wherein the first channel (106A) and the second channel (106B) are curved.

3. The helmet of claim 1, wherein the first channel (106A) and the second channel (106B) comprise a substantially horizontal convex shape.

4. The helmet (100) of claim 1, further comprising a liner disposed within the outer shell (102).

5. The helmet (100) of claim 1, further comprising a compressible material disposed within the one or more channels (106).

6. The helmet (100) of claim 1, further comprising a visor (104) coupled to the outer shell (102), the visor comprising a vent disposed on a lower portion of the visor.

7. A system comprising the helmet (100) of claim 1, the system further comprising the eyewear (202) and a latch (126) disposed on the helmet and configured to hold an arm (204) of the eyewear (202) within a channel (106) of the one or more channels.

8. The helmet (100) of claim 1, wherein the first channel (106A) and the second channel (1068) are each defined as a depression in the outer shell (102).

## Patentansprüche

1. Ein Helm (100), der Folgendes beinhaltet:
eine Außenschale (102), die konfiguriert ist, um mindestens teilweise um den Kopf eines Trägers angeordnet zu sein, wobei die Außenschale (102) einen oder mehrere Kanäle (106) beinhaltet, die konfiguriert sind, um einen Abschnitt einer entsprechenden Brille (202) aufzunehmen und die Brille relativ zu der Außenschale (102) zu halten,
wobei die Außenschale (102) einen ersten Kanal (106B), der auf einer linken Seite der Außenschale (102) angeordnet ist, und einen zweiten Kanal (106A) auf einer rechten Seite der Außenschale (102) beinhaltet, und
wobei der erste Kanal (106B) konfiguriert ist, um einen ersten Bügel der Brille aufzunehmen, und der zweite Kanal (106A) konfiguriert ist, um einen zweiten Bügel der Brille aufzunehmen;
**dadurch gekennzeichnet, dass**:
der erste Kanal und der zweite Kanal konfiguriert sind, um die Brille so zu halten, dass ein Glas der Brille auf einem rückwärtigen Abschnitt der Außenschale angeordnet ist.

2. Helm (100) gemäß Anspruch 1, wobei der erste Kanal (106A) und der zweite Kanal (106B) gekrümmt sind.

3. Helm gemäß Anspruch 1, wobei der erste Kanal (106A) und der zweite Kanal (106B) eine im Wesentlichen horizontale konvexe Form beinhalten.

4. Helm (100) gemäß Anspruch 1, der ferner ein Futter beinhaltet, das innerhalb der Außenschale (102) angeordnet ist.

5. Helm (100) gemäß Anspruch 1, der ferner ein zusammendrückbares Material beinhaltet, das innerhalb des einen oder der mehreren Kanäle (106) angeordnet ist.

6. Helm (100) gemäß Anspruch 1, der ferner einen Helmschirm (104) beinhaltet, der an die Außenschale (102) gekoppelt ist, wobei der Helmschirm ein Belüftungsloch beinhaltet, das auf einem unteren Abschnitt des Helmschirms angeordnet ist.

7. Ein System, das den Helm (100) gemäß Anspruch 1 beinhaltet, wobei das System ferner die Brille (202) und eine Verriegelung (126) beinhaltet, die auf dem Helm angeordnet ist und konfiguriert ist, um einen Bügel (204) der Brille (202) innerhalb eines Kanals (106) des einen oder der mehreren Kanäle zu halten.

8. Helm (100) gemäß Anspruch 1, wobei der erste Kanal (106A) und der zweite Kanal (106B) jeweils als eine Vertiefung in der Außenschale (102) definiert sind.

## Revendications

1. Un casque (100) comprenant :
une coque externe (102) configurée pour être disposée au moins partiellement autour de la tête d'une personne qui le porte, la coque externe (102) comprenant un ou
plusieurs canaux (106) configurés pour recevoir une portion d'un article de lunetterie (202) correspondant et tenir l'article de lunetterie relativement à la coque externe (102), la coque externe (102) comprenant un premier canal (106B) disposé sur un côté gauche de la coque externe (102) et un deuxième canal (106A) sur un côté droit de la coque externe (102), et
le premier canal (106B) étant configuré pour recevoir une première branche de l'article de lunetterie et le deuxième canal (106A) étant configuré pour recevoir une deuxième branche de l'article de lunetterie ;
**caractérisé en ce que** :
le premier canal et le deuxième canal sont configurés pour tenir l'article de lunetterie de telle sorte qu'une lentille de l'article de lunetterie est disposée sur une portion arrière de la coque externe.

2. Le casque (100) de la revendication 1, dans lequel le premier canal (106A) et le deuxième canal (106B) sont incurvés.

3. Le casque de la revendication 1, dans lequel le premier canal (106A) et le deuxième canal (106B) comprennent une forme convexe substantiellement horizontale.

4. Le casque (100) de la revendication 1, comprenant en outre un rembourrage disposé à l'intérieur de la coque externe (102).

5. Le casque (100) de la revendication 1, comprenant en outre un matériau compressible disposé à l'intérieur des un ou plusieurs canaux (106).

6. Le casque (100) de la revendication 1, comprenant en outre une visière (104) accouplée à la coque externe (102), la visière comprenant un évent disposé sur une portion inférieure de la visière.

7. Un système comprenant le casque (100) de la revendication 1, le système comprenant en outre l'article de lunetterie (202) et un mécanisme de verrouillage (126) disposé sur le casque et configuré pour tenir une branche (204) de l'article de lunetterie (202) à l'intérieur d'un canal (106) des un ou plusieurs canaux.

8. Le casque (100) de la revendication 1, dans lequel le premier canal (106A) et le deuxième canal (106B) sont définis chacun comme une dépression dans la coque externe (102).
